# EUROPEAN PATENT APPLICATION

(11) **EP 4 707 582 A1**
(43) Date of publication of application: **11.03.2026**
(21) Application number: 24198391.5
(22) Date of filing: 04.09.2024
(51) Int. Cl.: F03D 1/06

(54) **SPAR CAP, WIND TURBINE ROTOR BLADE, AND METHOD OF MANUFACTURING A SPAR CAP**

(71) Applicant: Nordex Energy SE & Co. KG, 22419 Hamburg (DE)
(72) Inventor: Fabri, Patrick Roman, 22419 Hamburg (DE); Raschen, Tobias, 22419 Hamburg (DE); Hubald, Mathias, 22419 Hamburg (DE)
(74) Representative: Epping - Hermann - Fischer

(57) **Abstract**

The invention relates to a spar cap (136) for a wind turbine rotor blade (110), the spar cap (136) being configured to extend close to a trailing edge (135) and to form, at least in a section between a root end (126) and a tip end (144), a part of the trailing edge (135) of the wind turbine rotor blade (110), the spar cap (136) comprising a stack (146) of fiber layers including first-type fiber layers (148) and second-type fiber layers (150), wherein
- a layer width (154) of the first-type fiber layers (148) is smaller than a layer width (156) of the second-type fiber layers (150),
- in the stack (146), the first-type fiber layers (148) are arranged offset to each other with respect to a width (W) of the stack (146), and
- in the stack (146), the second-type fiber layers (150) are aligned flush with one another with respect to the width (W) of the stack (146),
- the stack (146) is resin-infused and cured.

The invention also concerns a wind turbine rotor blade (110) and a method of manufacturing a spar cap.

## Description

The invention concerns a spar cap, a wind turbine rotor blade, and a method of manufacturing a spar cap.

Wind turbines with wind turbine rotor blades are widely known from the state of the art and are used to convert wind energy into electrical energy. Wind turbine rotor blades are usually manufactured in an aerodynamic shell design and comprise several components made of fiber-reinforced laminate, such as an aerodynamic shell. Typically, a wind turbine rotor blade has an elongated design, having a root for attaching the blade to the rotor hub. The wind turbine rotor blade extends from the root to a tip. Typically, two half shells are produced, which are placed on top of each other after their respective manufacture and bonded together to produce the wind turbine rotor blade. The half shells themselves may be segmented for manufacturing a so-called split blade or segmented blade.

Typically, the elongated wind turbine rotor blade varies its cross-sectional shape widely over its length. The cylindrical root section changes to an air-foil shaped cross-section, which gets smaller towards the tip. An intermediate part utilizing flattened air-foil shaped cross-sections, so-called flatback profiles, can be included in some designs. The wind turbine rotor blade has a leading edge and a trailing edge. Especially the height of the trailing edge can vary significantly over the length of the rotor blade.

It is necessary to provide reinforcement means at or within the wind turbine rotor blade for providing the respectively needed stiffness in view of the loads acting on the blade. A high stiffness in the trailing edge region is required, which, as mentioned, varies its shape and thickness significantly. For stiffening the trailing edge region, one or more spar caps comprising a number of separate fiber layers are arranged and respectively integrated in the half shells of the wind turbine rotor blade. The spar can be arranged in the rotor blade shell as a prefabricated part and as a direct lay-up of the fiber layers in the shell laminate. The design of these spar carps in view of their required mechanical properties or stiffness is challenging, as the spar cap thickness is constrained by the limited space near the trailing edge. Thus, the integration of the spar caps is difficult.

It is an object of the invention to provide an improved wind turbine blade.

This object is achieved by the independent claims. Advantageous embodiments are given in the sub-claims.

According to a first aspect, a spar cap for a wind turbine rotor blade is disclosed. The spar cap is configured to extend close to a trailing edge and to form, at least in a section between a root end and a tip end, a part of the trailing edge of the wind turbine rotor blade. The spar cap comprises a stack of fiber layers including first-type fiber layers and second-type fiber layers. A layer width of the first-type fiber layers is smaller than a layer width of the second-type fiber layers. In the stack, the first-type fiber layers are arranged offset to each other with respect to a width of the stack. In the stack, the second-type fiber layers are aligned flush with one another with respect to the width of the stack. The stack is resin-infused and cured, to form the spar cap.

The inventive spar cap is formed by a stack of fiber layers, which comprises at least two different types of fiber layers, which are stacked on top of each other. The types of fiber layers differ with regard to their layup arrangement.

The first-type layers are arranged offset to each other in relation to the stack width. In other words, the first-type fiber layers are arranged offset to one another transversely to the longitudinal direction of the layers or the stack, respectively. In other words, the first-type fiber layers are offset parallel to each other. Offset can also be described as staggered.

The second-type fiber layers are arranged on top of each other in such a way that they are flush with each other on the longitudinal sides. In other words, the second-type fiber layers are not offset parallel to one another in relation to the stack width. In yet other words, there is no transverse staggering of the second-type fiber layers.

A layer width of the first-type fiber layers is smaller than a layer width of the second-type fiber layers; for example, the width of the first-type fiber layers is one half to three quarters of that of the second-type fiber layers. The layer width of the first-type or second-type fiber layers means a maximum width of the respective first-type or second-type fiber layers. Preferably, all fiber layers of one type have the same or nearly the same layer width (deviations up to a maximum of 5%)

By this arrangement, the inventive spar cap has a cross-sectional profile which combines a quadrangular cross-section, created by the arrangement of the second-type fiber layers, and a trapezoidal cross-section, created by the arrangement of the first-type fiber layers, to increase structural efficiency. Basically, the quadrangular layup improves manufacturability through ease of layup and integration into the rotor blade half shell, while the trapezoidal layup allows for placement of the structural member directly or closely at the trailing edge.

As a key feature of the resulting layup, a resulting asymmetry of the layup in a transverse direction is achieved, which enables a most efficient placement of the utilized layers in the spar cap, allowing the spar cap over the entire span of the rotor blade to be positioned as close as possible along the trailing edge.

Even more, the inventive spar cap provides an optimized bonding gap for the adhesive joint at the trailing edge by the creation of a mostly constant thickness bonding gap between the half shells of the wind turbine rotor blade. With regard to the prior art, usually the bonding gap follows a V-shape, varying in thickness over its width, fully utilizing the allowable thickness tolerance band. The mixture of flush layup and transverse staggering of layers according to the invention significantly improves the control over the bonding gap shape and thus the bonding thickness, reducing scatter and thickness and keeping the adhesive thickness well within the tolerance band. The resulting adhesive joint features a more homogenous cross-section and improves the quality and mechanical properties of the adhesive joint.

The spar cap has a main extension direction and is configured to extend, in an installed state in a wind turbine rotor blade, spanwise along the wind turbine blade, e.g. along the longitudinal direction of the wind turbine rotor blade. The stack has a stack width that is comparatively small compared to the stack length. Consequently, the fiber layers of all types extend along the main extension direction and have a fiber layer width that is comparatively small compared to a fiber layer length.

The inventive spar cap is configured to be integrated into a half shell of the wind turbine rotor blade at the trailing edge. Together with a corresponding spar-cap in the other half shell, the spar cap forms the trailing edge, preferably together with an adhesive.

According to an embodiment, the first-type fiber layers form a first sub-stack and the second-type fiber layers form a second sub-stack, wherein the first and second sub-stacks are arranged on top of each other. Thus, each type of fiber layers forms a sub-unit, and the two sub-units are placed on top of each other. This contributes to an easy manufacturing of the stack and thus the spar cap.

According to an embodiment, the first-type fiber layers and the second-type fiber layers are stacked on top of each other in an alternating manner. This means that single and/or multiple layers of the first type and the second type are arranged alternately on top of each other, i.e. with respect to a stacking direction. For example, several sub-stacks of first-type fiber layers and second-type fiber layers can be arranged on top of each other in an alternating manner.

With respect to the above two embodiments, the distribution of the fiber layers in the thickness direction of the stack can be arranged in a coherent package but can be adjusted as desired, e.g. by splitting in multiple coherent packages or alternating layups of single layers.

According to an embodiment, the stack comprises third-type fiber layers. Further, a layer width of the third-type fiber layers is smaller than the layer width of the first-type fiber layers. In the stack, the third-type fiber layers are arranged offset to each other with respect to a width of the stack. The third-type fiber layers contribute to or form a trapezoidal layup and thus cross-sectional portion of the finally cured spar cap. This contributes to the above-mentioned functions and advantages.

According to an embodiment, the third-type fiber layers form a third sub-stack, wherein the three sub-stacks are arranged on top of each other. We refer to what is stated above. This contributes to the above-mentioned functions and advantages.

According to an embodiment, the first-type fiber layers and the third-type fiber layers form a first sub-stack and a third sub-stack, respectively, wherein the two sub-stacks are arranged between one or more second-type fiber layers. We refer to what is stated above. This contributes to the above-mentioned functions and advantages.

According to an embodiment, the first-type fiber layers, the second-type fiber layers and the third-type fiber layers are stacked on top of each other in an alternating manner. We refer to what is stated above. This contributes to the above-mentioned functions and advantages.

According to an embodiment, a thickness of the stack varies along a length of the stack. Thus, the design of the spar cap is adjusted perfectly to the loads occurring on a spar cap placed closely along the trailing edge.

According to an embodiment, at least one of the first-type fiber layers, the second-type fiber layers and/or the third-type fiber layers has a different length than the other fiber layers. In an example, each type of fiber layers preferably has different lengths. Furthermore, for example, even the fiber layers of one type may have different lengths. In a preferred example, the second-type fiber layers comprise a (maximum) length which is smaller than a (minimum) length of the third-type fiber layers, wherein a (maximum) length of the third-type fiber layers is smaller than a (minimum) length of the first-type fiber layers. This contributes to the above-mentioned functions and advantages.

According to an embodiment, the first-type fiber layers and/or the third-type fiber layers are configured to form portions of the spar cap having a trapezoidal cross-sectional shape. We refer to what is stated above. In other words, portions of the spar have a trapezoidal cross-section or a trapezoidal-like cross-section.

According to an embodiment, the second-type fiber layers are configured to form portions of the spar cap having a quadrangular cross-sectional shape. We refer to what is stated above.

According to a second aspect, a wind turbine rotor blade for a wind turbine is disclosed. The wind turbine rotor blade comprises a pressure-side half shell and a suction-side half shell. The two half shells are firmly bonded to each other. Each half shell comprises a spar cap according to an embodiment of the first aspect. Both spar caps are at least partly firmly connected to each other by an adhesive joint. A thickness of the adhesive bond is essentially constant in a chordwise direction.

The wind turbine enables the above-mentioned functions and advantages. The above-described embodiments with respect to the first aspect analogously apply to the wind turbine rotor blade.

The spar caps are arranged to extend along the trailing edge of the wind turbine rotor blade.

Essentially constant means that deviations of +/- 10 % of an average thickness are admissible.

According to an embodiment, the trailing edge of the rotor blade is formed by both spar caps and the adhesive in between.

According to an embodiment, the spar caps of both half shells have a symmetric structure, or the spar cap of one half shell differs from the spar cap of the other half shell with regard to a least one of the following:
- number of the first-type fiber layers, the second-type fiber layers and/or third-type fiber layers,
- level of offset of the offset arrangement of the first-type fiber layers and/or third-type fiber layers.

On the rotor blade level, the usual pair of structural members, i.e. the spar caps (one per half shell) can feature both, symmetric and asymmetric configurations. The number of narrow layers and the resulting blend of the cross-sectional shape of the structural member can differ between both half shells, as can the transverse staggering and overall number of layers. However, a symmetric configuration using an identical layup and/or an identical staggering sequence for both corresponding spar caps is also possible.

According to a third aspect, a method of manufacturing a spar cap of a wind turbine rotor blade is disclosed. The spar cap is configured to extend close to a trailing edge and to form, at least in a section between a root end and a tip end, a part of the trailing edge of the wind turbine rotor blade. The method comprises the steps of:
- providing a stack of fiber layers by stacking first-type fiber layers and second-type fiber layers, wherein
   -- a layer width of the first-type fiber layers is smaller than a layer width of the second-type fiber layers,
   -- in the stack, the first-type fiber layers are arranged offset to each other with respect to a width of the stack, and
   -- in the stack, the second-type fiber layers are aligned flush with one another with respect to the width of the stack,
- infusing the stack of first-type fiber layers and second-type fiber layers with resin, and
- curing the resin to manufacture the spar cap.

The method enables the above-mentioned functions and advantages. The above-described embodiments with respect to the first and second aspects analogously apply to the method.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic top view on a wind turbine rotor blade according to an embodiment of the invention,
Figure 5 shows a schematic view of a spar cap according to an embodiment of the invention,
Figure 6 shows a schematic top view of a layup of fiber layers of the spar cap of Figure 5,
Figure 7 shows different cross-sections of the spar cap of Figure 5,
Figures 8 to 11 show schematic cross-sections of different layups of fiber layers according to embodiments of the invention,
Figure 12 shows a schematic cross-sectional view of a trailing edge of the spar cap of Figure 5, and
Figure 13 shows a schematic flow chart of a method for repairing a rotor blade shell according to an embodiment of the invention.

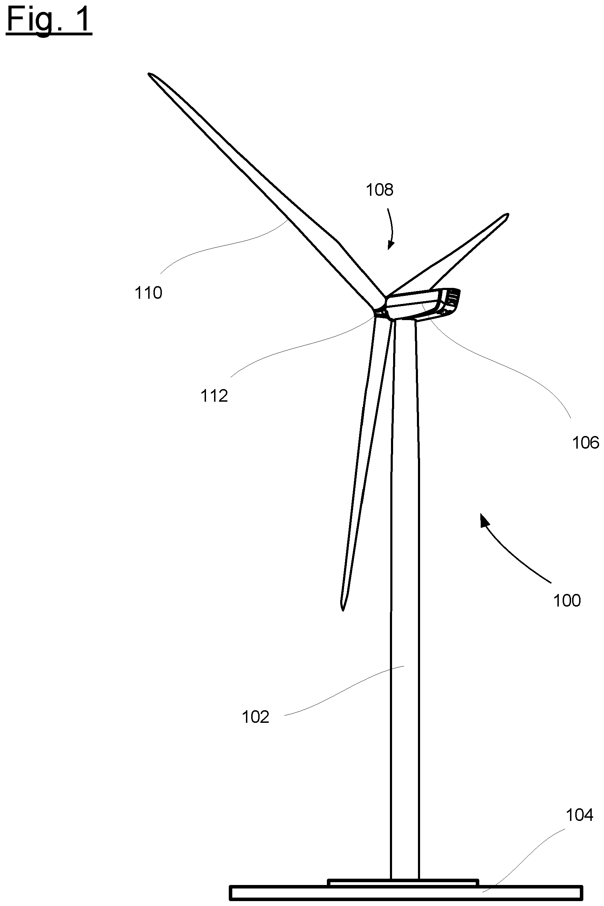

Figure 1 shows a schematic view of a wind turbine 100, which comprises a tower 102. The tower 102 is fixed to the ground by means of a foundation 104. A nacelle 106 is rotatably mounted at one end of the tower 102, opposite to the ground. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

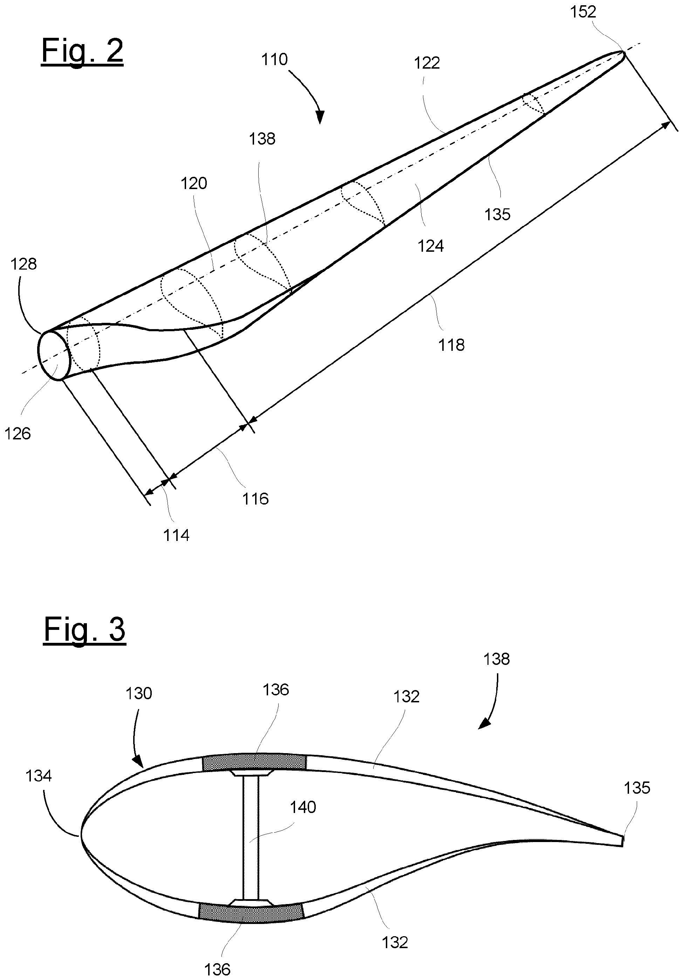

Figure 2 shows an exemplary rotor blade 110 according to the state of the art. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 extending along a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross-section profile 138 of the wind turbine rotor blade 110 shown in fig. 2, running traverse to the longitudinal direction 120. The rotor blade 110 has an aerodynamic shell 130 comprising two half shells, wherein a pressure side half shell 132 and a suction side half shell 132. The two half shells 132 are firmly connected to each other along at opposite connecting surfaces located at the leading edge 134 and trailing edge 135. Each half shell 132 has a spar cap 136 embedded in the shell-structure. The spar cap 136 can also be generally named "main laminate" and carries primarily flapwise bending loads during operation of the rotor blade 110. The rotor blade 110 further comprises a shear web 140 connecting the spar caps 136 within the rotor blade 110.

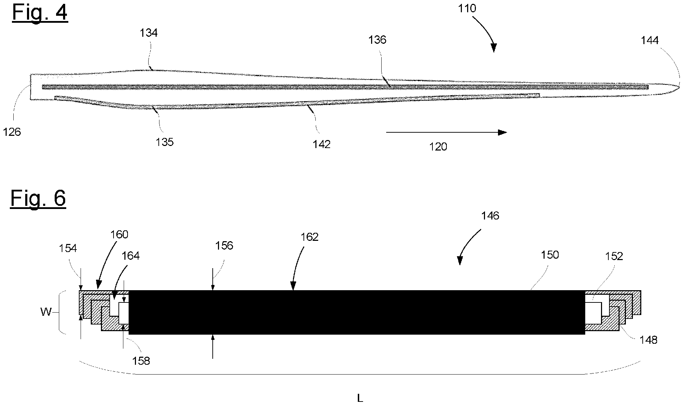

Figure 4 shows a schematic top view of a wind turbine rotor blade 110 according to the invention, which has the spar cap 136 (main spar cap) and a secondary spar cap 142 according to an embodiment of the invention to be included in each of the rotor blade half shells 132. Both the first spar cap 136 and the secondary spar cap 142 (hereinafter also referred to as spar cap 142 for short) extend along the longitudinal direction 120 of the wind turbine rotor blade 110, wherein the spar cap 142 extends at the trailing edge 135 at least in a section (or portion) between the root end 126 and a tip end 144.

The spar cap 142 can be manufactured as a prefabricated part or as an integral part of a rotor blade shell 130 during the shell manufacture. The spar cap 142 serves multiple purposes, namely:
- forming a secondary load path along the trailing edge 135 of the wind turbine rotor blade 110, stabilizing the trailing edge 135 particularly in edgewise load cases,
- creating the majority of edgewise stiffness of the wind turbine rotor blade 110, and
- creating the basis for a homogenous trailing edge structural adhesive joint.

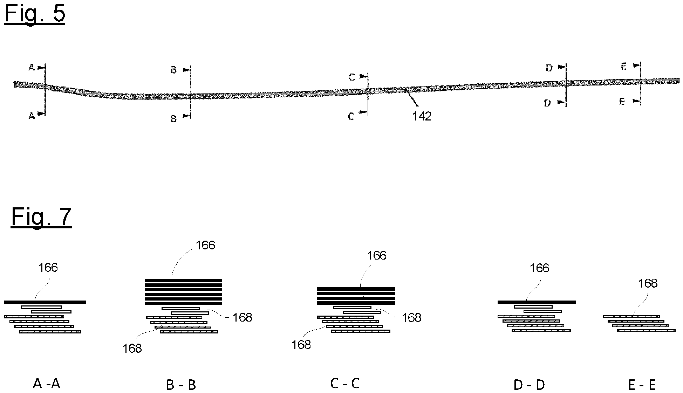

Figure 5 shows the secondary spar cap 142 in a schematic top view, wherein several cross-sectional planes A-A to E-E are indicated.

The spar cap 142 comprises a stack 146 of fiber layers, which are placed on top of each other during manufacture according to a specific layup pattern, as schematically shown in a top view according to Figure 6. After the layup, the fiber layers are infused with resin and cured afterwards to form the rigid structural spar cap 142.

The stack 146 comprises first-type fiber layers 148, second-type fiber layers 150 and third-type fiber layers 152. For the fiber layers, raw material of different widths, e.g. fibrous material strips or semi-finished products like pultruded planks, is utilized. The first-type fiber layers 148 each have a first layer width 154. The second-type fiber layers 150 have a second layer width 156. The third-type fiber layers 152 have a third layer width 158. In the shown embodiment, all fiber layers of each type essentially have the same layer width. All first-type fiber layers 148 form a first sub-stack 160, all second-type fiber layers 150 form a second sub-stack 162, and all third-type fiber layers 152 form a third sub-stack 164. The third sub-stack 164 is arranged between the first sub-stack 160 and the second sub-stack 162. The stack 146 has a width W and a length L.

The third layer width 158 is smaller than the first and second layer widths 154 and 156, wherein the first layer width 154 is smaller than the second layer width 156.

In the stack 146, the first-type fiber layers 148 are arranged offset to each other with respect to the width W of the stack 146. In the stack 146, the second-type fiber layers 150 are aligned flush with one another with respect to the width W of the stack 146. In the stack, the third-type fiber layers 152 are arranged offset to each other with respect to the width W of the stack 146.

An overall thickness of the stack 146 varies along the length L of the stack 146. This is because in each of the sub-stacks, the fiber layers have different lengths so that - starting from the root end 126 - the thickness of the stack 146 ascends to a maximum thickness and descends towards the tip end 144. In other words, along the length L of the stack 146, the fiber layers have an ascending staggering in the root region and a descending staggering in the tip region of the wind turbine rotor blade 110.

With the described layup of the fiber layers for the stack, the spar cap 142 gets a specific cross-sectional profile, which varies in length L. Figure 7 shows the cross-sections of the stack 146 corresponding to the cross-sectional planes A-A to E-E.

As can be seen, due to the arrangement of second-type fiber layers 150, quadrangular cross-sectional portions 166 of the spar cap 142 are formed. For the quadrangular cross-sectional portions the respective fiber layers 150 are stacked flush on top of each other without any transverse staggering.

As can be seen further, due to the arrangement of first-type and third-type fiber layers 148 and 152, trapezoidal cross-sectional portions 168 of the spar cap 142 are formed. Here, narrower layers are used, wherein the first and third layer widths 154, 158 are exemplarily (but not limited to) ½ to ¾ of the second layer width 156. These fiber layers 148, 152 represent the longest layers in the spar cap 142. To fit into the available construction space along the trailing edge 135, these layers 148, 152 are placed with an offset to the actual trailing edge 135 of the rotor blade half shells 132 and furthermore are staggered in transverse direction as discussed. Along the length L of the spar cap 142, the typical staggering of these layers as described above is applied whereas the longitudinal staggering of the first and third fiber layers 148, 152 is complementing the longitudinal staggering of the second fiber layers 150.

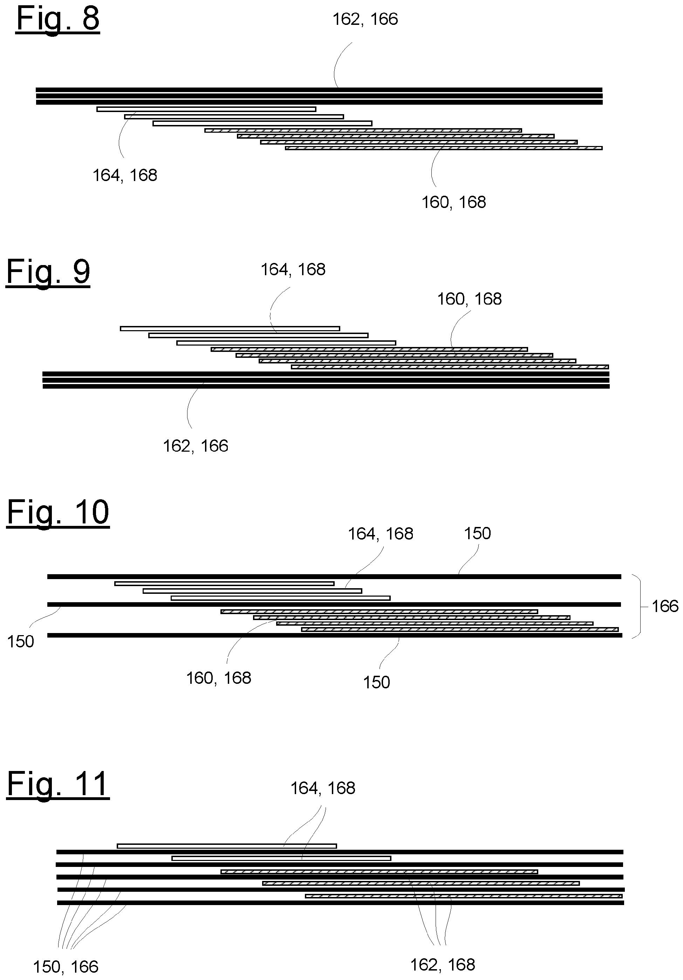

Figures 8 to 11 show schematic cross-sections of different layups of the fiber layers 148, 150, 152 according to embodiments of the invention.

Figure 8 schematically shows the cross-section of the layup for the spar cap 142 as described above, wherein the three different fiber-type layers 148 to 152 are arranged in the three sub-stacks 160, 162 and 164 and are placed on top of each other.

Figure 9 schematically shows the cross-section of an alternative layup for the spar cap 142, which is similar to the layup shown in Figure 8, wherein, however, the second sub-stack 162 is placed at the bottom of the stack 146.

Figure 10 schematically shows the cross-section of an alternative layup for the spar cap 142, wherein all first-type fiber layers 148 form the first sub-stack 160 and all the third-type fiber layers 152 form the third sub-stack 164 as described above. Different to what is described above, these two sub-stacks 160 and 164 are arranged between one or more second-type fiber layers 150.

Figure 11 schematically shows the cross-section of an alternative layup for the spar cap 142, which differs from the one above in that the fiber layers of all types are stacked on top of each other in an alternating manner. This means that individual or a few layers of the different types are arranged alternately on top of each other.

As already mentioned in the introductory portion, the spar cap 142 according to an embodiment of the invention contributes to a resulting adhesive joint between the two half shells 132, which features a more homogenous cross-section and improves the quality and mechanical properties of the adhesive joint.

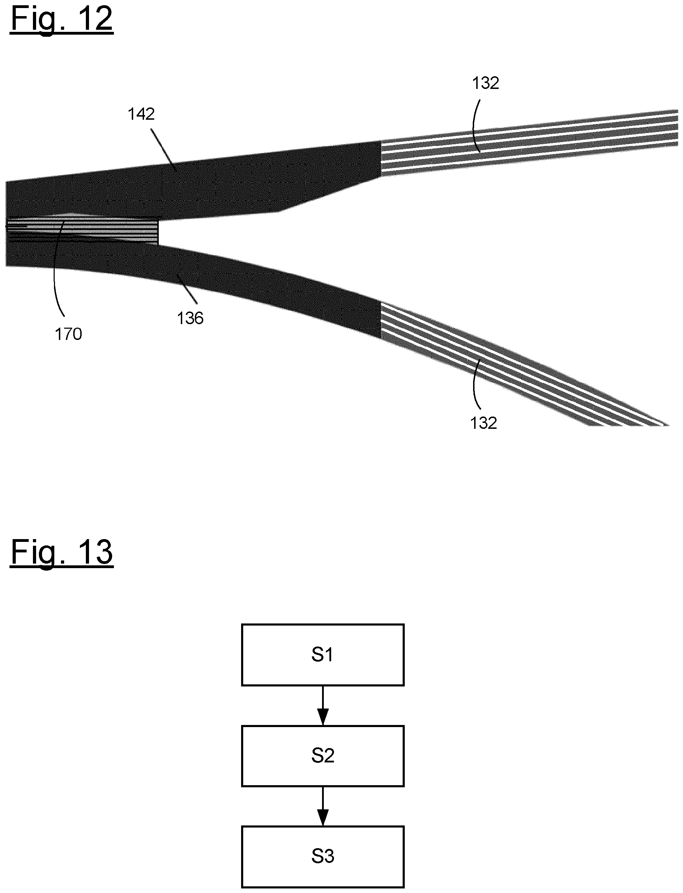

Contrary to bonding gaps in a V-shape as known from the prior art, which vary in thickness over their width, as shown in Figure 12, however, the spar cap 142 according to the described embodiments enables an adhesive joint 170 whose shape can be controlled very well via the cross-sectional shape of the spar cap 142. In the shown example of Figure 12, we note that the spar cap 142 according to the described embodiment of the invention is part of one half shell 132, whereas a different spar cap is used for the other half shell, e.g. the spar cap 136 as shown in Figure 3.

With regard to Figure 13, an exemplary method according to an inventive embodiment for manufacturing the spar cap 142 of Figures 4 to 7 is disclosed.

In a first step S1, a stack 146 of fiber layers is formed by stacking first-type fiber layers 148, second-type fiber layers 150 and third-type fiber layers 152, as described above.

In a second step S2, the stack 146 with all the fiber layers is infused with resin.

In a final step S3, the resin is cured, e.g. by applying additional heat, to manufacture the spar cap 142.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection
- 130: shell
- 132: half shell
- 134: leading edge
- 135: trailing edge
- 136: spar cap
- 138: cross-section profile
- 140: shear web
- 142: secondary spar cap
- 144: tip end
- 146: stack
- 148: first-type fiber layers
- 150: second-type fiber layers
- 152: third-type fiber layers
- 154: first layer width
- 156: second layer width
- 158: third layer width
- 160: first sub-stack
- 162: second sub-stack
- 164: third sub-stack
- 166: quadrangular cross-sectional portion
- 168: trapezoidal cross-sectional portion
- 170: adhesive joint
- A-A, ...: cross-sectional plane
- L: length
- W: width

## Claims

1. Spar cap (136) for a wind turbine rotor blade (110), the spar cap (136) being configured to extend close to a trailing edge (135) and to form, at least in a section between a root end (126) and a tip end (144), a part of the trailing edge (135) of the wind turbine rotor blade (110), the spar cap (136) comprising a stack (146) of fiber layers including first-type fiber layers (148) and second-type fiber layers (150), wherein
- a layer width (154) of the first-type fiber layers (148) is smaller than a layer width (156) of the second-type fiber layers (150),
- in the stack (146), the first-type fiber layers (148) are arranged offset to each other with respect to a width (W) of the stack (146), and
- in the stack (146), the second-type fiber layers (150) are aligned flush with one another with respect to the width (W) of the stack (146),
- the stack (146) is resin-infused and cured.

2. Spar cap (136) according to claim 1, wherein the first-type fiber layers (148) form a first sub-stack (160) and the second-type fiber layers (150) form a second sub-stack (162), and wherein the first and second sub-stacks (160, 162) are arranged on top of each other.

3. Spar cap (136) according to claim 1, wherein the first-type fiber layers (148) and the second-type fiber layers (150) are stacked on top of each other in an alternating manner.

4. Spar cap (136) according to any of claims 1 to 3, wherein
- the stack (146) comprises third-type fiber layers (152),
- a layer width (158) of the third-type fiber layers (152) is smaller than the layer width (154) of the first-type fiber layers (148), and
- in the stack (146), the third-type fiber layers (152) are arranged offset to each other with respect to a width (W) of the stack (146).

5. Spar cap (136) according to claim 4, wherein the third-type fiber layers (152) form a third sub-stack (164), and wherein the three sub-stacks (160, 162, 164) are arranged on top of each other.

6. Spar cap (136) according to claims 4 or 5, wherein the first-type fiber layers (148) and the third-type fiber layers (152) form a first sub-stack (160) and a third sub-stack (164), respectively, wherein the two sub-stacks (160, 164) are arranged between one or more second-type fiber layers (150) .

7. Spar cap (136) according to claims 4 to 6, wherein the first-type fiber layers (148), the second-type fiber layers (150) and the third-type fiber layers (152) are stacked on top of each other in an alternating manner.

8. Spar cap (136) according to any of the preceding claims, wherein a thickness of the stack (146) varies along a length (L) of the stack (146).

9. Spar cap (136) according to claims 4 to 8, wherein at least one of the first-type fiber layers (148), the second-type fiber layers (150) and/or the third-type fiber layers (152) has a different length (L) than the other fiber layers.

10. Spar cap (136) according to claims 4 to 9, wherein the first-type fiber layers (148) and/or the third-type fiber layers (152) are configured to form portions (168) of the spar cap (136) having a trapezoidal cross-sectional shape.

11. Spar cap (136) according to any of the preceding claims, wherein the second-type fiber layers (150) are configured to form portions (166) of the spar cap (136) having a quadrangular cross-sectional shape.

12. Wind turbine rotor blade (110) for a wind turbine (100), the wind turbine rotor blade (110) comprising a pressure-side half shell (132) and a suction-side half shell (132), wherein
- the two half shells (132) are firmly bonded to each other,
- each half shell (132) comprises a spar cap (136) according to any one of claims 1 to 11,
- both spar caps (136) are at least partly firmly connected to each other by an adhesive joint (170), and
- a thickness of the adhesive bond is essentially constant in a chordwise direction.

13. Wind turbine rotor blade (110) according to claim 12, wherein the trailing edge (135) of the rotor blade (110) is formed by both spar caps (136) and the adhesive in between.

14. Wind turbine rotor blade (110) according to claim 12 or 13, wherein the spar caps (136) of both half shells (132) have a symmetric structure, or
wherein the spar cap (136) of one half shell (132) differs from the spar cap (136) of the other half shell (132) with regard to at least one of the following:
- number of the first-type fiber layers (148), the second-type fiber layers (150) and/or third-type fiber layers (152),
- level of offset of the offset arrangement of the first-type fiber layers (148) and/or third-type fiber layers (152) .

15. Method of manufacturing a spar cap (136) of a wind turbine rotor blade (110), the spar cap (136) being configured to extend close to a trailing edge (135) and to form, at least in a section between a root end (126) and a tip end (144), a part of the trailing edge (135) of the wind turbine rotor blade (110), the method comprising the steps of:
- providing a stack (146) of fiber layers by stacking first-type fiber layers (148) and second-type fiber layers (150), wherein
-- a layer width (154) of the first-type fiber layers (148) is smaller than a layer width (156) of the second-type fiber layers (150),
-- in the stack (146), the first-type fiber layers (148) are arranged offset to each other with respect to a width (W) of the stack (146), and
-- in the stack (146), the second-type fiber layers are aligned flush with one another with respect to the width (W) of the stack (146),
- infusing the stack (146) of first-type fiber layers (148) and second-type fiber layers (150) with resin, and
- curing the resin to manufacture the spar cap (136).
